# EUROPEAN PATENT APPLICATION

(11) **EP 4 737 086 A1**
(43) Date of publication of application: **06.05.2026**
(21) Application number: 25212538.0
(22) Date of filing: 31.10.2025
(51) Int. Cl.: B29B 11/16, B29D 99/00

(54) **PREFORM FOR A COMPOSITE AIRFOIL OF A TURBINE ENGINE**

(30) Priority: 01.11.2024 US 202463715153 P
(71) Applicant: General Electric Company, Cincinnati, Ohio 45215 (US)
(72) Inventor: WU, Wei, Evendale, 45241 (US); GILBERT, Aaron, Lynn, 01910 (US); XIE, Ming, Evendale, 45215 (US); KOORS, Bruce, Evendale, 45215 (US)
(74) Representative: Openshaw & Co.

(57) **Abstract**

A preform for a composite airfoil (300, 302) of a gas turbine engine (100) includes a first woven fabric (410) and a second woven fabric (420) located opposite the first woven fabric (410), with a second inner surface (426) of the second woven fabric (420) opposing a first inner surface (416) of the first woven fabric (410) to form a preform gap (401) therebetween. A first transverse woven fabric portion (432, 434, 510) extends from the first inner surface (416) towards the second inner surface (426), and a second transverse woven fabric portion (442, 444, 520) extends from the second inner surface (426) towards the first inner surface (416). The second transverse woven fabric portion is engaged with the first transverse woven fabric portion to form a joint (470, 530). All the fabrics are three-dimensional woven fabric including a plurality of reinforcing fiber tows (202).

## Description

### CROSS REFERENCE TO RELATED APPLICATIONS

The present application claims the benefit of U.S. Provisional Patent Application No. 63/715,153, filed on November 1, 2024, which is hereby incorporated by reference herein in its entirety.

### TECHNICAL FIELD

The present disclosure relates to composite airfoils, preforms therefor, and methods of manufacturing the composite airfoils, particularly, composite airfoils for aircraft engines.

### BACKGROUND

Turbine engines used in aircraft generally include a fan, a compressor section, a combustion section, and a turbine section. A combustor of the combustion section generates combustion gases for driving one or more turbines of the turbine section, and the turbine can be used to drive the fan. A portion of air flowing into the fan flows through the compressor section, a combustion section, and a turbine section as core air, and another portion of the air flowing into the fan bypasses these sections and flows through the turbine engine as bypass air. The compressor section can include one or more compressors, also be driven by the turbine, to compress the core air before the core air flows into the combustor. Composite materials may be used to manufacture various components of the turbine engine, particularly, when the turbine engine is a turbine engine for an aircraft.

### BRIEF DESCRIPTION OF THE DRAWINGS

Features and advantages of the present disclosure will be apparent from the following description of various exemplary embodiments, as illustrated in the accompanying drawings, wherein like reference numerals generally indicate identical elements or elements that are structurally similar or functionally similar.
FIG. 1 is a schematic, cross-sectional view of a turbine engine for an aircraft.
FIG. 2A is a schematic view of a three-dimensional fiber weave pattern.
FIG. 2B is a schematic, cross-sectional view of the fiber weave pattern shown in FIG. 2A taken along line 2B-2B in FIG. 2A.
FIG. 2C is a schematic, cross-sectional view of a fiber weave pattern shown similar to the fiber weave pattern shown in FIG. 2A, but with a different interlocking fiber pattern.
FIG. 2D is a schematic, cross-sectional view of a fiber weave pattern similar to the fiber weave pattern shown in FIG. 2A, but with another interlocking fiber pattern.
FIG. 3 is a flow chart of a general process of manufacturing a composite component that may be used in the turbine engine of FIG. 1.
FIG. 4 is a schematic, cross-sectional view taken along line 4-4 in FIG. 1 of a composite airfoil that may be used in the turbine engine shown in FIG. 1.
FIG. 5 is a cross-sectional view of the composite airfoil taken along line 5-5 in FIG. 4.
FIG. 6A is a schematic view of a portion of a preform that can be used to form the composite airfoil shown in FIGS. 4 and 5.
FIG. 6B is a schematic view of a portion of a preform that can be used to form the composite airfoil shown in FIGS. 4 and 5.
FIG. 7 is a schematic, cross-sectional view, taken from a perspective similar to that of FIG. 4, of a composite airfoil that may be used in the turbine engine shown in FIG. 1.
FIG. 8A is a schematic view of a portion of a preform that can be used to form the composite airfoil shown in FIG. 7.
FIG. 8B is a schematic view of a portion of a preform that can be used to form the composite airfoil shown in FIG. 7.
FIG. 9 is a schematic view of a portion of a preform that can be used to form the composite airfoil shown in FIGS. 4 and 5.
FIG. 10 is a schematic view of a portion of a preform that can be used to form a composite airfoil similar to the composite airfoil shown in FIG. 7.

### DETAILED DESCRIPTION

Features, advantages, and embodiments of the present disclosure are set forth or apparent from a consideration of the following detailed description, drawings, and claims. Moreover, the following detailed description is exemplary and intended to provide further explanation without limiting the scope of the disclosure as claimed.

Various embodiments are discussed in detail below. While specific embodiments are discussed, this is done for illustration purposes only. A person skilled in the relevant art will recognize that other components and configurations may be used without departing from the present disclosure.

As used herein, the terms "first," "second," and "third" may be used interchangeably to distinguish one component from another and are not intended to signify location or importance of the individual components.

The terms "upstream" and "downstream" refer to the relative direction with respect to fluid flow in a fluid pathway. For example, "upstream" refers to the direction from which the fluid flows, and "downstream" refers to the direction to which the fluid flows.

As used herein, the terms "axial" and "axially" refer to directions and orientations that extend substantially parallel to a centerline of the turbine engine. Moreover, the terms "radial" and "radially" refer to directions and orientations that extend substantially perpendicular to the centerline of the turbine engine. In addition, as used herein, the terms "circumferential" and "circumferentially" refer to directions and orientations that extend arcuately about the centerline of the turbine engine.

The terms "coupled," "attached," "connected," and the like, refer to both direct coupling, attaching, or connecting, as well as indirect coupling, attaching, or connecting through one or more intermediate components or features, unless otherwise specified herein.

The singular forms "a," "an," and "the" include plural references unless the context clearly dictates otherwise.

Here and throughout the specification and claims, range limitations are combined, and interchanged. Such ranges are identified and include all the sub-ranges contained therein unless context or language indicates otherwise. For example, all ranges disclosed herein are inclusive of the endpoints, and the endpoints are independently combinable with each other.

The term "composite," as used herein, is indicative of a material having two or more constituent materials. A composite can be a combination of at least two or more metallic, non-metallic, or a combination of metallic and non-metallic elements or materials. Examples of a composite material can be, but not limited to, a polymer matrix composite (PMC), a ceramic matrix composite (CMC), and a metal matrix composite (MMC). The composite may be formed of a matrix material and a reinforcing element or reinforcing material, such as a fiber (referred to herein as a reinforcing fiber).

As used herein "reinforcing fibers" may include, for example, glass fibers, carbon fibers, steel fibers, or para-aramid fibers, such as Kevlar^{®} available from DuPont of Wilmington, Delaware. The reinforcing fibers may be in the form of fiber tows that include a plurality of fibers that is formed into a bundle.

As used herein, a "composite component" refers to a structure or a component including any suitable composite material. Composite components, such as a composite airfoil, can include several layers or plies of composite material. The layers or plies can vary in stiffness, material, and dimension to achieve the desired composite component or composite portion of a component having a predetermined weight, size, stiffness, and strength. One or more layers of adhesive can be used in forming or coupling composite components. The adhesive can require curing at elevated temperatures or other hardening techniques.

As used herein, a "preform" refers to a shaped or shapeable arrangement of reinforcing fibers configured to define at least a portion of the composite component prior to resin infiltration, curing, or consolidation. The reinforcing fibers can be provided in different forms, including, but not limited to, two-dimensional woven fabrics, three-dimensional woven fabrics, braided fabrics, stitched fabrics, knitted fabrics, non-woven mats, unidirectional tapes, or combinations thereof. A preform can include multiple layers or plies, may incorporate stitching, binder materials, or tackifiers to maintain a desired geometry, and may be near-net shaped or provided as a portion of an assembly or a subassembly for subsequent processing.

As used herein, PMC refers to a class of materials and, more specifically, a class of composite materials using a polymer matrix material. Resins can be used as matrix materials for PMCs and can be generally classified as thermosets or thermoplastics. Thermoplastic resins are generally categorized as polymers that can be repeatedly softened and caused to flow when heated, and hardened when sufficiently cooled due to physical rather than chemical changes. Notable example classes of thermoplastic resins include nylons, thermoplastic polyesters, polyaryletherketones, and polycarbonate resins. Specific examples of high-performance thermoplastic resins that have been contemplated for use in aerospace applications include polyetheretherketone (PEEK), polyetherketoneketone (PEKK), polyetherimide (PEI), polyaryletherketone (PAEK), and polyphenylene sulfide (PPS). In contrast, once fully cured into a hard rigid solid, thermoset resins do not undergo significant softening when heated, but instead thermally decompose when sufficiently heated. Notable examples of thermoset resins include epoxy, bismaleimide (BMI), and polyimide resins.

The PMC material may be a prepreg. A prepreg is a reinforcing material (e.g., a reinforcing fiber) pre-impregnated with the polymer matrix material. Non-limiting examples of processes for producing polymeric prepregs include hot melt pre-pregging in which a molten resin is deposited onto the fiber reinforcement material and powder pre-pregging in which a resin is deposited onto the fiber reinforcement material, by way of a non-limiting example, electrostatically, and then adhered to the fiber, by way of a non-limiting example, in an oven or with the assistance of heated rollers.

Instead of using a prepreg with thermoplastic polymers, another non-limiting example utilizes dry reinforcing fibers. The dry reinforcing fibers can be positioned to form a preform. For example, the reinforcing fibers and, more specifically, reinforcing fiber tows may be woven together as a woven fabric. Woven fabrics can include, but are not limited to, dry carbon fibers woven together exclusively or woven together with polymer fibers or filaments. Non-prepreg braided architectures can be made in a similar fashion. With this approach, it is possible to tailor the fiber volume of the part by dictating the relative concentrations of the thermoplastic fibers and the reinforcement fibers that have been woven or braided together. Additionally, different types of reinforcement fibers can be braided or woven together in various concentrations to tailor the properties of the part. For example, glass fibers, carbon fibers, and thermoplastic fibers could all be woven together in various concentrations to tailor the properties of the part. The carbon fibers provide the strength of the system, the glass fibers can be incorporated to enhance the impact properties, which is a design characteristic for parts located near the inlet of the engine, and the thermoplastic fibers provide the binding for the reinforcement fibers.

In yet another non-limiting example, resin transfer molding (RTM) can be used to form at least a portion of a composite component. Generally, RTM includes the application of dry fibers to a mold or a cavity. The dry fibers can include braided material, woven material, or any combination thereof. Resin can be pumped into or otherwise provided to the mold or the cavity to impregnate the dry fibers. The combination of the impregnated fibers and the resin is then cured and removed from the mold. As noted above, the matrix material can include thermoplastic and thermoset resins. When removed from the mold, the composite component can require post-curing processing. RTM may be a vacuum assisted process. That is, air from the cavity or the mold can be removed and replaced by the resin prior to heating or curing. The placement of the dry fibers also can be manual or automated. The dry fibers can be contoured to shape the composite component or to direct the resin. Optionally, additional layers or reinforcing layers of a material differing from the dry fiber can also be included or added prior to heating or curing.

As used herein, CMC refers to a class of materials with reinforcing fibers in a ceramic matrix. Generally, the reinforcing fibers provide structural integrity to the ceramic matrix. Some examples of reinforcing fibers can include, but are not limited to, non-oxide silicon-based materials (e.g., silicon carbide, silicon nitride, or mixtures thereof), non-oxide carbon-based materials (e.g., carbon), oxide ceramics (e.g., silicon oxycarbides, silicon oxynitrides, aluminum oxide (Al₂O₃), silicon dioxide (SiO₂), aluminosilicates such as mullite, or mixtures thereof), or mixtures thereof.

Some examples of ceramic matrix materials can include, but are not limited to, non-oxide silicon-based materials (e.g., silicon carbide, silicon nitride, or mixtures thereof), oxide ceramics (e.g., silicon oxycarbides, silicon oxynitrides, aluminum oxide (Al₂O₃), silicon dioxide (SiO₂), aluminosilicates, or mixtures thereof), or mixtures thereof. Optionally, ceramic particles (e.g., oxides of Si, Al, Zr, Y, and combinations thereof) and inorganic fillers (e.g., pyrophyllite, wollastonite, mica, talc, kyanite, and montmorillonite) can also be included within the ceramic matrix.

Generally, particular CMCs can be referred to by their combination of type of fiber/type of matrix. For example, C/SiC for carbon-fiber-reinforced silicon carbide, SiC/SiC for silicon carbide-fiber-reinforced silicon carbide, SiC/SiN for silicon carbide fiber-reinforced silicon nitride, SiC/SiC-SiN for silicon carbide fiber-reinforced silicon carbide/silicon nitride matrix mixture, etc. In other examples, the CMCs can be comprised of a matrix and reinforcing fibers comprising oxide-based materials such as aluminum oxide (Al₂O₃), silicon dioxide (SiO₂), aluminosilicates, and mixtures thereof. Aluminosilicates can include crystalline materials such as mullite (3Al₂O₃•2SiO₂), as well as glassy aluminosilicates.

In certain non-limiting examples, the reinforcing fibers may be bundled (e.g., form fiber tows) and/or coated prior to inclusion within the matrix. The bundles of fibers may be impregnated with a slurry composition prior to forming the preform or after formation of the preform. The preform may then undergo thermal processing, and subsequent chemical processing to arrive at a component formed of a CMC material having a desired chemical composition. For example, the preform may undergo a cure or a burn-out to yield a high char residue in the preform, and subsequent melt-infiltration with silicon, or a cure or a pyrolysis to yield a silicon carbide matrix in the preform, and subsequent chemical vapor infiltration with silicon carbide. Additional steps may be taken to improve densification of the preform, either before or after chemical vapor infiltration, by injecting the preform with a liquid resin or a polymer followed by a thermal processing step to fill the voids with silicon carbide. CMC material as used herein may be formed using any known or hereafter developed methods, including, but not limited to, melt infiltration, chemical vapor infiltration, polymer impregnation pyrolysis (PIP), or any combination thereof.

The term "metallic" as used herein is indicative of a material that is metal-based including metals, such as, but not limited to, titanium, iron, aluminum, stainless steel, and nickel alloys. A metallic material or a metal alloy can be a combination of at least two or more elements or materials, where at least one is a metal.

As used herein, an alloy is "based" on a particular element when that element is present in the alloy at the greatest weight percent, by total weight of the alloy, of all elements contained in the alloy. For example, an iron-based alloy has a higher weight percentage of iron than any other single element present in the alloy.

As noted above, certain components of gas turbine engines, particularly, those used in aircraft, may be made from composite materials. Such components include, for example, various airfoils, such as struts of a frame and stator vanes. These composite components can be multi-functional and can have a hollow cavity that provides a passage for service lines, such as wiring harnesses and fluid pipes, to pass though the airfoil and into the turbine engine. The attachment to hold these lines can challenging to design and, for example, if designed with multiple attachment features and significantly increase the weight of the airfoil. Disclosed herein are composite airfoils that can be used as struts or stator vanes formed using a three-dimensional (3D) woven fabric. The three-dimensional (3D) woven fabric includes branches of fiber tows, which may be referred to herein as a pi-joint that can be positioned to form internal ribs of the composite airfoil. These internal ribs can be used in different implementations, such as solid structural support ribs or hollow support ribs that hold a service line.

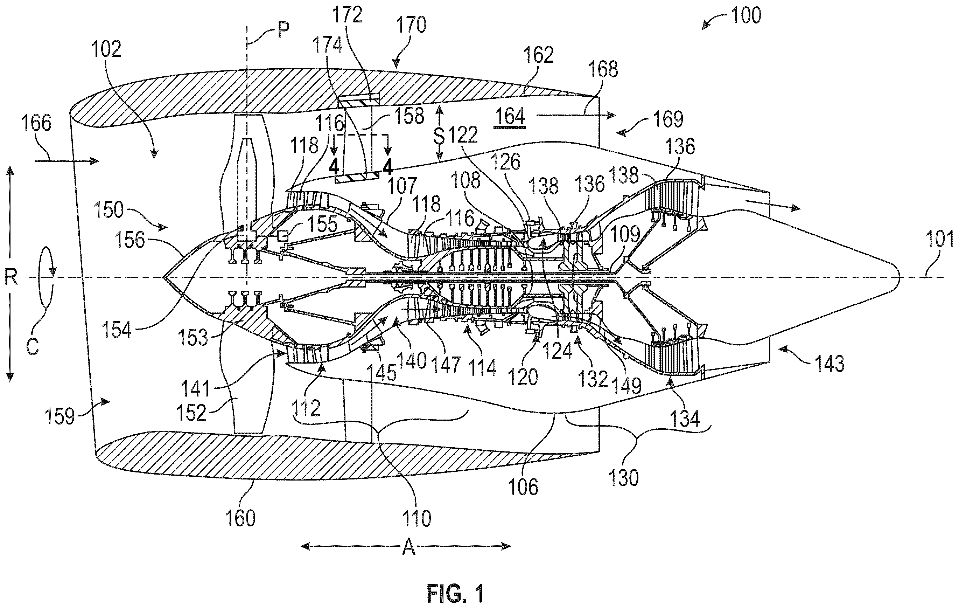

FIG. 1 is a schematic, cross-sectional diagram of a turbine engine 100 that may be used on an aircraft. The turbine engine 100 has an axial direction A (extending parallel to a longitudinal centerline axis 101, shown for reference in FIG. 1), a radial direction R, and a circumferential direction C. The circumferential direction C extends in a direction rotating about the longitudinal centerline axis 101 (the axial direction A).

The turbine engine 100 depicted in FIG. 1 includes, in serial flow relationship, a compressor section 110, a combustion section 120, and a turbine section 130. The turbine engine 100 depicted in FIG. 1 is a turbofan engine that includes a fan section 102. The compressor section 110, the combustion section 120, and the turbine section 130 are disposed downstream from the fan section 102. The compressor section 110, the combustion section 120, and the turbine section 130 are substantially enclosed within an outer casing 106 that is substantially tubular and defines a core inlet 141. In this embodiment, the core inlet 141 is annular about the longitudinal centerline axis 101. As schematically shown in FIG. 1, the compressor section 110 includes a booster or a low-pressure (LP) compressor 112 followed downstream by a high-pressure (HP) compressor 114. The combustion section 120 is downstream of the compressor section 110. The turbine section 130 is downstream of the combustion section 120 and includes a high-pressure (HP) turbine 132 followed downstream by a low-pressure (LP) turbine 134. The turbine engine 100 further includes a core air exhaust nozzle 143 (also referred to as a jet exhaust nozzle) that is downstream of the turbine section 130. The compressor section 110, the combustion section 120, and the turbine section 130 together define, at least in part, a core air flow path 140 extending from the core inlet 141 to the core air exhaust nozzle 143, and through which core air 145 flows. As will be discussed in more detail below, the turbine engine 100 includes a high-pressure (HP) shaft 108 and a low-pressure (LP) shaft 109. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109.

Each of the LP compressor 112 and the HP compressor 114 may include a plurality of compressor stages. In each stage, a plurality of compressor blades 116 rotates relative to a corresponding plurality of static compressor vanes 118 (also called nozzles) to compress or to pressurize the core air 145 passing through the stage. In a single compressor stage, the plurality of compressor blades 116 can be provided in a ring, extending radially outwardly relative to the longitudinal centerline axis 101 from a blade platform to a blade tip (e.g., extend in the radial direction R). The compressor blades 116 may be a part of a compressor rotor that includes a disk and each compressor blade 116 of the plurality of compressor blades 116 extends radially from the disk. Other configurations of the compressor rotor may be used, including, for example, blisks where the disk and the compressor blades 116 are integrally formed with each other to be a single piece. The corresponding static compressor vanes 118 are positioned upstream of and adjacent to the rotating compressor blades 116. The compressor vanes 118 for a stage of the compressor can be mounted to a core casing 107 in a circumferential arrangement. The core casing 107 may define, at least in part, the core air flow path 140. Each compressor stage may be used to sequentially compress the core air 145 flowing through the core air flow path 140, generating compressed air 147. Any suitable number of compressor blades 116, compressor vanes 118, and compressor stages may be used.

Each of the HP turbine 132 and the LP turbine 134 also may include a plurality of turbine stages. In each stage, a plurality of turbine blades 136 rotates relative to a corresponding plurality of static turbine vanes 138 (also called a nozzle) to extract energy from combustion gases 149 passing through the stage. The turbine blades 136 may be a part of a turbine rotor. Any suitable configuration for a turbine rotor may be used, including, for example, a disk with the plurality of turbine blades 136 extending from the disk. The corresponding static turbine vanes 138 are positioned upstream of and adjacent to the rotating turbine blades 136. The turbine vanes 138 for a stage of the turbine can be mounted to the core casing 107 in a circumferential arrangement.

In the combustion section 120, fuel, received from a fuel system (not shown), is injected into a combustion chamber 124 of a combustor 122 by fuel nozzles 126. The fuel is mixed with the compressed air 147 from the compressor section 110 to form a fuel and air mixture, and combusted, generating combustion products (i.e., combustion gases 149). As will be discussed further below, adjusting a fuel metering unit (not shown) of the fuel system changes the volume of fuel provided to the combustion chamber 124 and, thus, changes the amount of propulsive thrust produced by the turbine engine 100 to propel the aircraft. The combustion gases 149 are discharged from the combustion chamber 124. These combustion gases may be directed into the turbine blades 136 of the HP turbine 132 and, then, the turbine blades 136 of the LP turbine 134, and the combustion gases 149 drive (rotate) the turbine blades 136 of the HP turbine 132 and the LP turbine 134. Any suitable number of turbine blades 136, turbine vanes 138, and turbine stages may be used. After flowing through the turbine section 130, the combustion gases 149 are exhausted from the turbine engine 100 through the core air exhaust nozzle 143 to provide propulsive thrust.

The turbine engine 100 further includes one or more drive shafts. The HP shaft 108 drivingly connects the HP turbine 132 to the HP compressor 114. The HP turbine 132 and the HP compressor 114 rotate in unison through the HP shaft 108. The LP shaft 109 drivingly connects the LP turbine 134 to the LP compressor 112. The LP turbine 134 and the LP compressor 112 rotate in unison through the LP shaft 109. More specifically, the turbine rotors of the HP turbine 132 are connected to the HP shaft 108, and the compressor rotors of the HP compressor 114 are connected to the HP shaft 108. The combustion gases 149 are routed into the HP turbine 132 and expanded through the HP turbine 132 where a portion of the kinetic energy from the combustion gases 149 is extracted via the one or more stages of the turbine blades 136 and turbine vanes 138 of the HP turbine 132. This causes the HP shaft 108 to rotate, supporting operation of the HP compressor 114 (self-sustaining cycle) and rotating the compressor rotors and, thus, the compressor blades 116 of the HP compressor 114 via the HP shaft 108. In this way, the combustion gases 149 do work on the HP turbine 132. The combustion gases 149 are then routed into the LP turbine 134 and expanded through the LP turbine 134. Here, a second portion of the kinetic energy is extracted from the combustion gases 149 via one or more stages of the turbine blades 136 and the turbine vanes 138 of the LP turbine 134. This causes the LP shaft 109 to rotate, which supports operation of the LP compressor 112 (self-sustaining cycle), and rotation of the compressor rotors and, thus, the compressor blades 116 of the LP compressor 112 via the LP shaft 109. In this way, the combustion gases 149 do work on the LP turbine 134. The HP shaft 108 and the LP shaft 109 are disposed coaxially about the longitudinal centerline axis 101. The HP shaft 108 has a diameter greater than that of the LP shaft 109, and the HP shaft 108 is located radially outward of the LP shaft 109. The HP shaft 108 and the LP shaft 109 are rotatable about the longitudinal centerline axis 101 and, as discussed above, coupled to rotatable elements such as the compressor rotors and the turbine rotors.

The fan section 102 shown in FIG. 1 includes a fan 150 having a plurality of fan blades 152 coupled to a disk 153. As depicted in FIG. 1, the fan blades 152 extend outwardly from the disk 153 generally along the radial direction R. In the case of a variable pitch fan, as depicted in FIG. 1, for example, the plurality of fan blades 152 is rotatable relative to the disk 153 about a pitch axis P. Each of the fan blades 152 can be connected to the disk 153 by a pitch bearing 154 that allows for rotation of the fan blades 152 about the pitch axis P. The fan blades 152 are rotatable within the pitch bearing 154 by an actuator 155 operatively coupled to the fan blades 152 to collectively vary the pitch of the fan blades 152 in unison. The fan blades 152 and the disk 153 are rotatable, together, about the longitudinal centerline axis 101 by the LP shaft 109. The LP compressor 112 may also be directly driven by the LP shaft 109, as depicted in FIG. 1. The disk 153 is covered by a fan hub 156 aerodynamically contoured to promote an airflow through the plurality of fan blades 152. Further, a nacelle 160 circumferentially surrounds the fan 150, and, in the depicted embodiment, at least a portion of the outer casing 106. The nacelle 160 may also be referred to as an annular fan casing or an outer nacelle. The nacelle 160 is supported relative to the outer casing 106 by a plurality of outlet guide vanes 158 that is circumferentially spaced about the nacelle 160 and the outer casing 106. A downstream section 162 of the nacelle 160 extends over an outer portion of the outer casing 106 so as to define a bypass airflow passage 164 therebetween.

During operation of the turbine engine 100, a volume of air 166 enters the turbine engine 100 through an inlet of the nacelle 160 and/or the fan section 102 (referred to herein as an engine inlet 159). As the volume of air 166 passes across the fan blades 152, a first portion of air (bypass air 168) is directed or routed into the bypass airflow passage 164, and a second portion of air (core air 145) is directed or is routed into an upstream section of the core air flow path 140, or, more specifically, into the core inlet 141. The ratio between the bypass air 168 and the core air 145 is commonly known as a bypass ratio. Simultaneously with the flow of the core air 145 through the core air flow path 140 (as discussed above), the bypass air 168 is routed through the bypass airflow passage 164 before being exhausted from a bypass air discharge nozzle 169 of the turbine engine 100, also providing propulsive thrust. The bypass air discharge nozzle 169 and the core air exhaust nozzle 143 are air exhaust nozzles of the turbine engine 100.

These outlet guide vanes 158 can be part of a guide vane structure 170. The guide vane structure 170 will be described in more detail below, and the outlet guide vanes 158 are an example of a composite airfoil discussed herein that may be implemented in the turbine engine 100. The guide vane structure 170 includes an outer shell 172 that extends circumferentially about a guide vane structure centerline axis, which can be congruent to the longitudinal centerline axis 101 of the turbine engine 100, and also extends in the axial direction A. The guide vane structure 170 also includes an inner hub 174 that extends circumferentially about the guide vane structure centerline axis. Each outlet guide vane 158 extends between the outer shell 172 and the inner hub 174, and the outlet guide vanes 158 are circumferentially spaced apart from one another about the guide vane structure centerline axis. The outlet guide vanes 158 can be hollow, and one or more of the outlet guide vanes 158 can have a passage for service lines, such as wiring harnesses and fluid pipes, to pass from the nacelle 160, though the outlet guide vane 158, and into the outer casing 106.

The turbine engine 100 shown in FIG. 1 and discussed herein (i.e., a turbofan engine) is provided by way of example only. In other embodiments, any other suitable engine may be utilized with aspects of the present disclosure. For example, in other embodiments, the engine may be any other suitable gas turbine engine, such as a turboshaft engine, a turboprop engine, a turbojet engine, an unducted single fan engine, and the like. In such a manner, in other embodiments, the gas turbine engine may have other suitable configurations, such as other suitable numbers or arrangements of shafts, compressors, turbines, fans, etc. Further, although the turbine engine 100 is shown as a direct drive, fixed-pitch turbofan engine, in other embodiments, the turbine engine 100 may be a geared turbine engine (e.g., including a gearbox between the fan 150 and a shaft driving the fan, such as the LP shaft 109), may be a variable pitch turbine engine (i.e., including a fan 150 having a plurality of fan blades 152 rotatable about their respective pitch axes), etc.

The turbine engine 100 discussed herein is suitable for use on aircraft. Suitable aircraft include, for example, airplanes, helicopters, and unmanned aerial vehicles (UAV). In other embodiments, the turbine engine may be any other turbine engine, such as an industrial turbine engine incorporated into a power generation system, or a nautical turbine engine on a ship or other vessel.

Various components of the turbine engine 100 may be formed from composite materials. These components are referred to herein as composite components. The fan blades 152, the outlet guide vanes 158, the compressor blades 116, and the compressor vanes 118 may be made from PMC materials, for example. Other composites, such as CMC materials, may be used for other components, including, for example, turbine blades 136, turbine vanes 138, and components of the combustion section 120 such as combustor liners used to form the combustion chamber 124. Moreover, although the embodiments are described relative to a turbine engine 100, the composite component and methods of manufacturing may be used to form composite components used in applications beyond turbine engines.

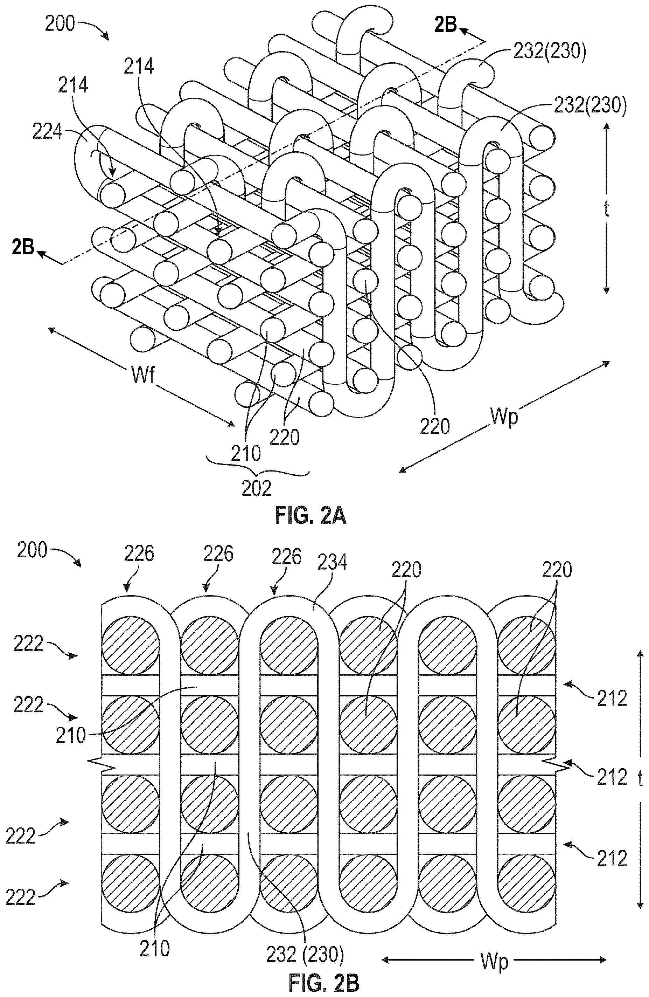

FIGS. 2A and 2B are schematics showing a three-dimensional fiber weave pattern that may be used to form a woven fabric 200. FIG. 2B is a cross-sectional view taken along line 2B-2B in FIG. 2A. In embodiments discussed herein, the composite components may be formed from a plurality of reinforcing fibers and, more specifically, a plurality of reinforcing fiber tows 202. The plurality of reinforcing fiber tows 202 is woven together to form the woven fabric 200. The plurality of reinforcing fiber tows 202 includes a plurality of first fiber tows, which, in this embodiment, is a plurality of warp fiber tows 210. The plurality of reinforcing fiber tows 202 also includes a plurality of second fiber tows, which, in this embodiment, is a plurality of weft fiber tows 220. The weft fiber tows 220 are oriented transversely to the warp fiber tows 210, and, in the depicted embodiment, the warp fiber tows 210 and the weft fiber tows 220 are oriented generally orthogonally to each other. The woven fabric 200 thus includes a warp direction Wp (also referred to as a first direction) and a weft direction Wf (also referred to as a second direction). The warp fiber tows 210 extend in the warp direction Wp and the weft fiber tows 220 extend in the weft direction Wf.

In the depicted embodiment, the woven fabric 200 is a three-dimensional woven fabric and the woven fabric 200 also includes a thickness direction t. The thickness direction may also be referred to as a z direction. The warp fiber tows 210 may be arranged relative to each other to form a plurality of warp fiber layers 212 in the thickness direction t and to form a plurality of warp fiber columns 214 in the weft direction Wf. Three warp fiber layers 212 are depicted in FIGS. 2A and 2B, but the woven fabric 200 may include any other numbers of warp fiber layers 212, including more than three warp fiber layers 212.

During a weaving process, the warp fiber tows 210 may be held in tension in the warp direction Wp, and one of the weft fiber tows 220 is passed or drawn therethrough. A shuttle (not shown) may be used to draw the one of the weft fiber tows 220 through the warp fiber tows 210. The shuttle may be passed through the warp fiber tows 210 in a first direction and then reversed to pass through the warp fiber tows 210 at a different height in the thickness direction, forming a plurality of weft fiber layers 222 in the thickness direction t. One of the weft fiber tows 220 may be continuous through at least a portion of the thickness of the woven fabric 200, and the one of the weft fiber tows 220 may include a portion extending in the thickness direction t, which may be referred to in some embodiments as a turnaround. This portion of the weft fiber tow thus may be referred to herein as a turnaround portion 224. The warp fiber tows 210 may be moved relative to each other to allow a space for the one of the weft fiber tows 220 to pass through the space. The warp fiber tows 210 may be moved relative to each other in different ways to create different patterns. In this way, weaving the woven fabric 200 includes positioning the warp fiber tows 210 (e.g., such that the warp fiber tows 210 are held stationary in tension), then laying the weft fiber tows 220 (e.g., such that the weft fiber tows 220 are drawn through and inserted over and under the corresponding warp fiber tows 210), and repeating this process until the woven fabric 200 is formed. The weft fiber tows 220 may be arranged relative to each other to form the plurality of weft fiber layers 222 in the thickness direction t and to form a plurality of weft fiber columns 226 in the warp direction Wp.

The woven fabric 200 also includes a plurality of interlocking fiber tows 230 (also referred to as Z-weaver fiber tows). The interlocking fiber tows 230 are additional warp fiber tows that are directed through the thickness of the woven fabric 200 during weaving to stitch the reinforcing fiber tows 202 together. The interlocking fiber tows 230 are woven to extend between two or more of the weft fiber layers 222. Different fiber patterns may be used for the interlocking fiber tows 230. A first interlocking fiber pattern, shown in FIGS. 2A and 2B, is an orthogonal interlocking pattern and the interlocking fiber tows 230 are referred to herein as orthogonal interlocking fiber tows 232. In this pattern, the orthogonal interlocking fiber tows 232 extend substantially in a direction that is orthogonal to the warp direction Wp, which is the thickness direction t in the depicted embodiment. As with the weft fiber tows 220, the interlocking fiber tows 230 (e.g., the orthogonal interlocking fiber tows 232) may include a turnaround portion 234. In the depicted embodiment, the turnaround portion 234 of the orthogonal interlocking fiber tows 232 is positioned to form an alternating pattern between each warp fiber columns 214. In the depicted embodiment, the orthogonal interlocking fiber tows 232 extend through the thickness of the woven fabric 200 and may be referred to as through-thickness interlocking fiber tows, but other thicknesses may be used.

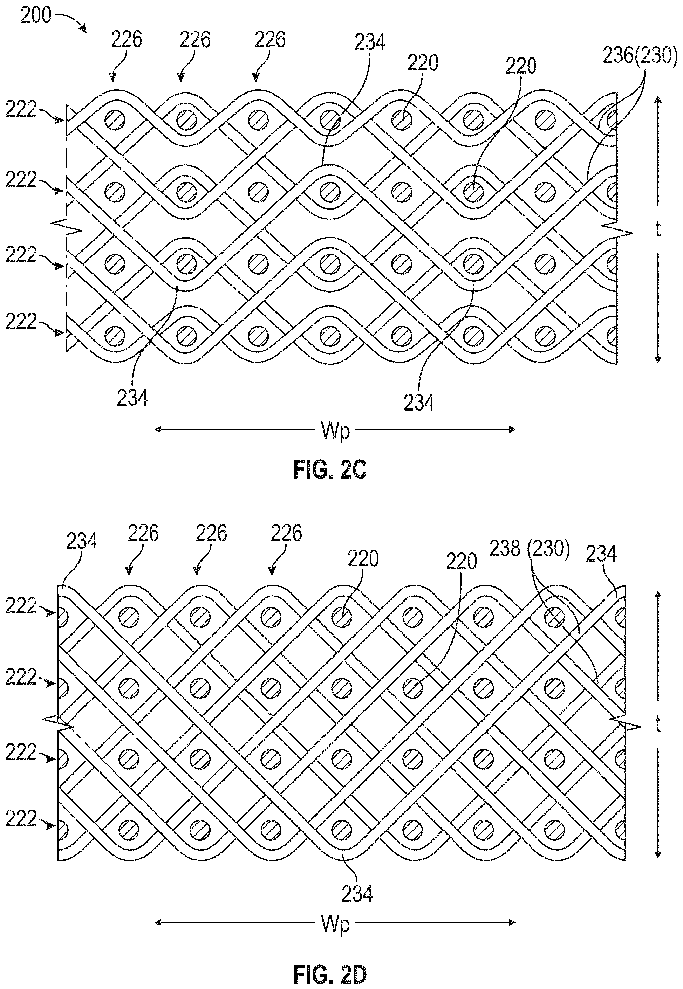

A second interlocking fiber pattern, shown in FIG. 2C, is an angle interlock pattern and, more specifically, a layer-to-layer angle interlock pattern. FIG. 2C is a cross-sectional view of a woven fabric taken from a perspective similar to that of FIG. 2B. The interlocking fiber tows 230 are referred to in this embodiment as angled interlocking fiber tows 236. Instead of extending orthogonally through the woven fabric 200, the angled interlocking fiber tows 236 form an oblique angle relative to the warp direction Wp. In the depicted embodiment, the angled interlocking fiber tows 236 extend through adjacent weft fiber layers 222 in an alternating or a sinusoidal pattern to interlock these adjacent layers with each other, with the oblique angle formed between adjacent turnaround portions 234 of the angled interlocking fiber tows 236. The turnaround portions 234 of the angled interlocking fiber tows 236 are located on every other weft fiber columns 226, but, in other embodiments, two or more weft fiber columns 226 may be between adjacent turnaround portions 234 of the angled interlocking fiber tows 236. In other embodiments, the angled interlocking fiber tows 236 may extend through more than two adjacent weft fiber layers 222. For example, as shown in FIG. 2D, the interlocking fiber tows 230 are through-thickness interlocking fiber tows, which are referred to herein as through-thickness angled interlocking fiber tows 238. FIG. 2D is a cross-sectional view of a woven fabric taken from a perspective similar to that of FIG. 2B. The weft fiber tows 220 are omitted in FIGS. 2C and 2D for clarity.

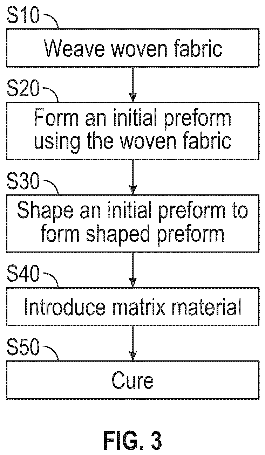

FIG. 3 is a flow chart of a general process of manufacturing a composite component that may be used in the turbine engine 100 of FIG. 1. The method includes, in step S10, weaving the woven fabric 200, such as on a loom. In step S20, the method includes forming or preparing a preform and, more specifically, an initial preform using one or more pieces of woven fabric 200. This step may include, for example, laying up a plurality of woven fabrics 200 or otherwise positioning the plurality of woven fabrics 200 relative to each other to form the initial preform. In step S30, the initial preform is shaped to form a shaped preform. Shaping the initial preform may include, for example, using a mold tool to shape the initial preform. Suitable shaping processes may include vacuum forming or other forming processes to impart a shape to the initial preform. The shaped preform may form a final preform, but, optionally, additional machining processes and manufacturing processes, such as adding filler material, may be carried out on the shaped preform to form the final preform.

In step S40, a matrix material is introduced into the preform. For example, after the preform is complete (i.e., the final preform), a matrix material may be injected into the preform in step S40 to generate an infiltrated (or an impregnated) preform. When the composite component is a polymer matrix composite, polymers, a resin, or both, may be pumped into, injected into, or otherwise provided to a mold or a cavity to infiltrate or to impregnate the dry fibers in this step. This step may be done in conjunction with step S30 when using resin transfer molding (RTM) processes, for example. Other infiltration processes be used in this step depending upon the matrix material. The matrix material may be introduced in other ways. As noted above, the preform may be formed using prepreg fiber tows to introduce a matrix material, and, in such an embodiment, the matrix material is introduced when the reinforcing fiber tows 202 (FIG. 2A) are woven into the preform (step S10) or when the reinforcing fiber tows 202 are otherwise laid up. When prepreg fiber tows are used, an explicit step of injecting a resin material may be omitted.

The method continues with curing the infiltrated preform in step S50 to bond the composite material and, more specifically, the matrix together forming the composite component. The curing process depends upon the materials used, such as the matrix material used, and can include solidifying or otherwise hardening the matrix material around the fiber tows within the preform. For example, when the matrix material is a polymer, the curing may include both solidifying and chemically crosslinking the polymer chains. Curing the infiltrated preform can include several processes. For instance, an infiltrated preform may be debulked and cured by exposing the infiltrated preform to elevated temperatures and pressures in an autoclave. The infiltrated preform may also be subjected to one or more further processes, such as, e.g., a burn off cycle and a densification process. The curing step S50 may be done in conjunction with step S40, such as when the matrix material is injected into the final preform in a molten state and the curing step includes cooling the matrix material.

Further, the composite component may be finish machined as needed. Finish machining may define the final finished shape or the contour of the composite component. For example, when the composite component is a fan blade 152 (FIG. 1), the edges of the fan blade 152 may be machined to define the final shape or the contour of the airfoil. Additionally, the composite component can be coated with one or more suitable coatings, such as, e.g., an environmental barrier coating (EBC) or a polyurethane surface coating.

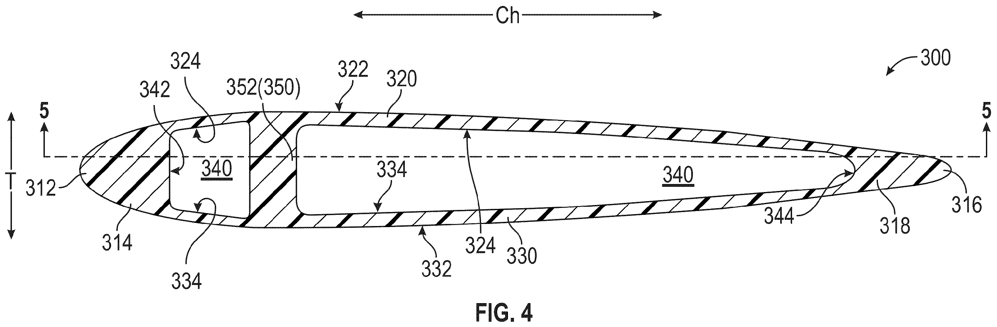

FIG. 4 is a schematic, cross-sectional view of a composite component that may be used in the turbine engine 100 of FIG. 1. As noted above, various components of the turbine engine 100 may be composite components formed from composite materials and, in particular, a preform formed of one or more woven fabrics 200 (FIG. 2A). As depicted in FIG. 4, the composite component is an airfoil 300. More specifically, the airfoil 300 shown depicted in FIG. 4 is one of outlet guide vanes 158 (FIG. 1), and FIG. 4 is a cross-sectional view of the outlet guide vane 158 taken along line 4-4 in FIG. 1. The description of the airfoil 300, however, can apply to the other airfoils of the turbine engine 100. More specifically, the description of the airfoil 300 can apply to other stator vanes, such as, for example, the compressor vanes 118 (FIG. 1), or struts. The airfoil 300 and methods of forming the airfoil 300 are suitable for these components, which may be PMC components. However, the airfoil 300 and methods discussed herein are also applicable to CMC components, including, for example, the turbine vanes 138 (FIG. 1), as these processes do not require machining of the cavity to insert a service tube. These static airfoils 300 may also be referred to as struts, and the methods discussed herein may be used for other composite struts located outside of air flow paths.

The airfoil 300 includes a leading edge 312 formed on a leading portion 314 of the airfoil 300 and a trailing edge 316 formed on a trailing portion 318 of the airfoil 300. The airfoil 300 includes a first wall 320 and a second wall 330, each connecting the leading portion 314 with the trailing portion 318. The first wall 320 includes a first outer surface 322, and the second wall 330 includes a second outer surface 332. The first outer surface 322 and the second outer surface 332 are formed on each side of the airfoil between the leading edge 312 and the trailing edge 316. The first outer surface 322 and the second outer surface 332 are located on opposite sides of the airfoil 300 and form the outer surfaces of the airfoil 300. As can be seen in FIG. 4, the airfoil 300 is a symmetric airfoil. The airfoil 300 may have any suitable shape, however, including, for example, concave surfaces, and the airfoil 300 may be a cambered airfoil, with the first outer surface 322 being a suction surface having a convex curvature and the second outer surface 332 being a pressure surface that is generally flat. The airfoil 300 also includes a chordwise direction Ch extending from the leading edge 312 to the trailing edge 316. A thickness direction T of the airfoil 300 is perpendicular to the chordwise direction Ch.

The airfoil 300 is a hollow airfoil having a cavity 340 formed therein. The cavity 340 can help reduce the weight of the airfoil 300 and thus the overall weight of the turbine engine 100. The cavity 340 may be a void space, but the cavity 340 can also be filled with a lightweight material, such as foam. The cavity 340 can also be used as a passage for service lines, such as wiring harnesses and fluid pipes, to pass through the airfoil 300. The cavity 340 is defined between the first wall 320 and the second wall 330. More specifically, the first wall 320 includes a first inner surface 324, and the second wall 330 includes a second inner surface 334. The first inner surface 324 and the second inner surface 334 each defines, at least in part, the cavity 340. The leading portion 314 and the trailing portion 318 can also define the cavity 340 together with the first wall 320 and the second wall 330. More specifically, the leading portion 314 and the trailing portion 318 can each include inner surfaces, a leading portion inner surface 342, and a trailing portion inner surface 344, respectively. The leading portion inner surface 342 and the trailing portion inner surface 344 each also defines, at least in part, the cavity 340.

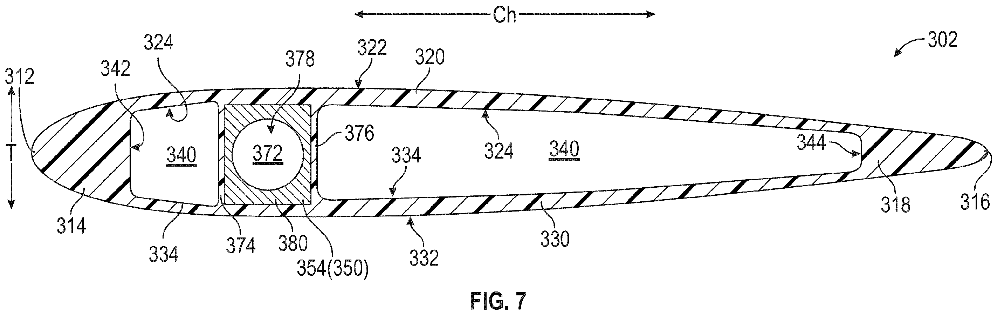

The airfoil 300 can also include one or more ribs 350 positioned within the cavity 340. The rib shown in FIG. 4 is a solid rib 352. Reference numeral 350 is used to refer generically to any of the ribs discussed herein. FIG. 4 shows only one rib 350, but the airfoil 300 can have a plurality of ribs 350 positioned in the cavity 340, including, for example, a plurality of ribs 350 arranged in the chordwise direction Ch. The plurality of ribs 350 can include a plurality of ribs 350 of the same type, e.g., the solid rib 352, or ribs of a different type, e.g., the solid rib 352 and a hollow rib 354 (FIG. 7).

The solid rib 352 is connected to each of the first wall 320 and the second wall 330. The solid rib 352 is connected to the first wall 320 and the second wall 330 at opposing locations. The solid rib 352 extends in the thickness direction T between the first wall 320 and the second wall 330. The solid rib 352 can be used to strengthen and to increase the rigidity of the first wall 320 and the second wall 330 without increasing the thickness of each of the first wall 320 and the second wall 330. The solid rib 352 can also maintain the width of the cavity 340 in the thickness direction T. The solid rib 352 can be formed integrally with the first wall 320 and the second wall 330 in the manner discussed below.

The airfoil 300 is a composite component comprised of a matrix material formed around the reinforcing fiber tows 202 (FIG. 2A). The composite material may be, for example, a polymer matrix composite (PMC). As noted above, however, the methods discussed herein may be used with other materials, and thus the airfoil 300 may be formed from these other materials, and the airfoil 300 may be a ceramic matrix composite (CMC). The reinforcing fiber tows 202 are omitted in FIG. 4 for clarity.

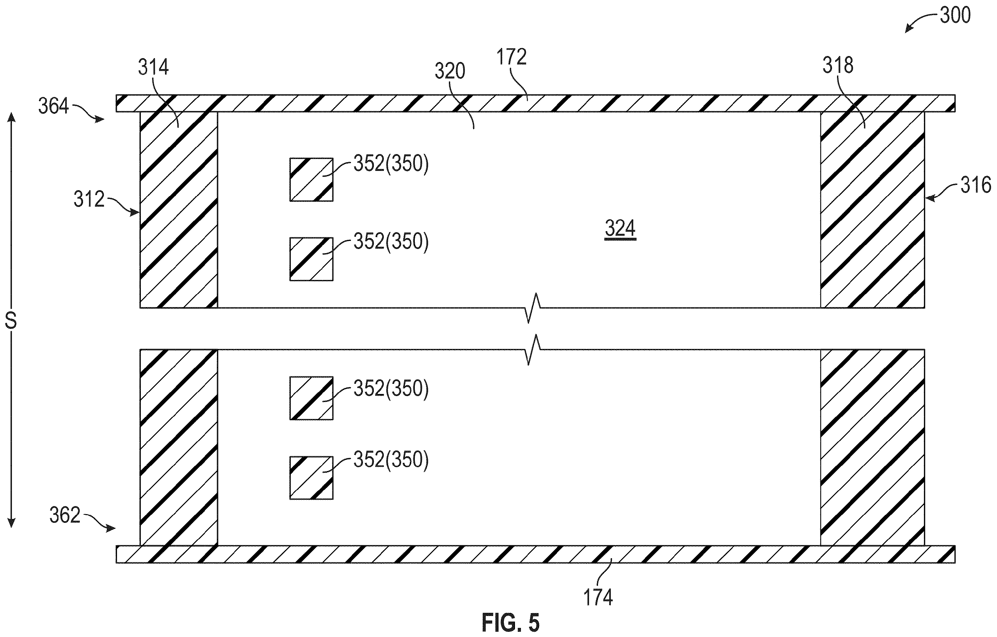

FIG. 5 is a cross-sectional view of the airfoil 300 taken along line 5-5 in FIG. 4. The airfoil 300 includes an inner end portion 362 and an outer end portion 364. The airfoil 300 includes also a spanwise direction S, and the airfoil 300 extends in the spanwise direction S from the inner end portion 362 to the outer end portion 364. The spanwise direction S can be perpendicular to each of the chordwise direction Ch and the thickness direction T (FIG. 4). Each of the inner end portion 362 and the outer end portion 364 can be connected to a frame, a case, or other support structure to span therebetween. In this example, when the airfoil 300 is the outlet guide vane 158, the airfoil 300 is connected on the inner end portion 362 to the inner hub 174 and on the outer end portion 364 to the outer shell 172. Each of the leading portion 314, the trailing edge 316, the first wall 320, the second wall 330 (see FIG. 4), and the cavity 340 can extend the full length of the airfoil 300 in the spanwise direction S. In a similar manner, the solid rib 352 can extend in the spanwise direction S either the full length of the airfoil 300 in the spanwise direction S or a portion thereof. As noted above, the airfoil 300 can have a plurality of ribs 350, such as a plurality of the solid ribs 352, positioned in the cavity 340. As shown in FIG. 5, for example, the airfoil 300 includes a plurality of the solid ribs 352 in the spanwise direction S. As depicted in FIG. 5, for example, the plurality of the solid ribs 352 can be aligned in the spanwise direction S.

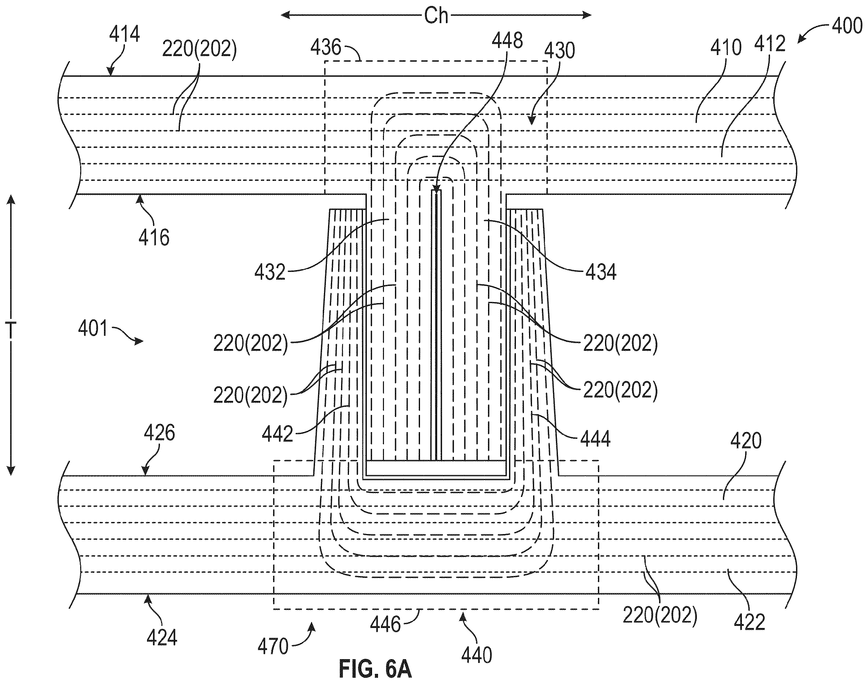

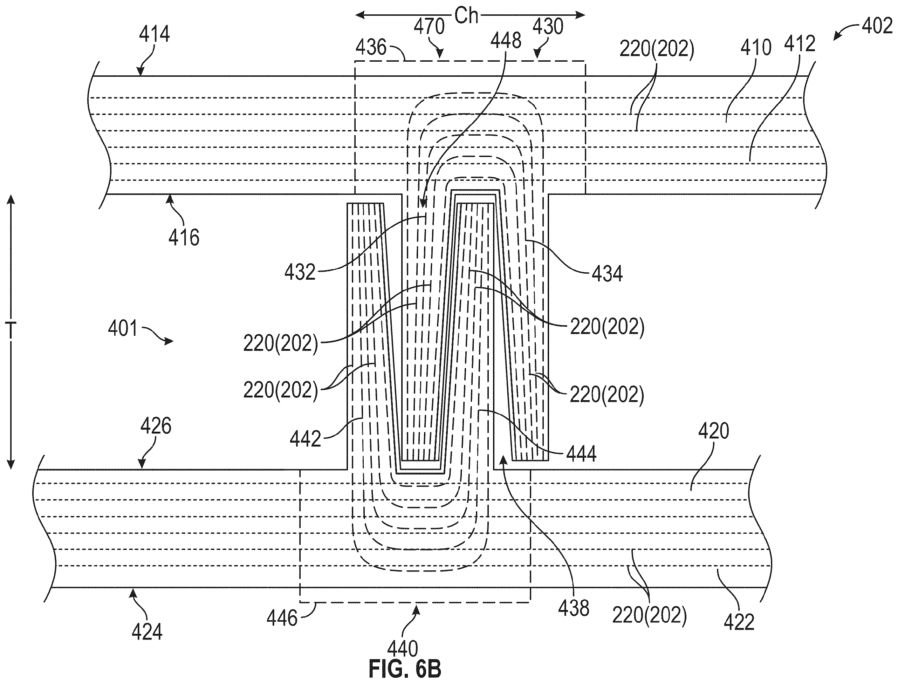

FIGS. 6A and 6B are schematic views of a portion of a preform that can be used to form the airfoil 300 shown in FIGS. 4 and 5. More specifically, each of FIGS. 6A and 6B shows a portion of the preform used to form one of the solid ribs 352 in FIGS. 4 and 5. FIG. 6A shows a first preform 400. The first preform 400 includes a first woven fabric 410 that is used to form the first wall 320 (FIG. 4), or a portion thereof. The first preform 400 also includes a second woven fabric 420 that is used to form the second wall 330 (FIG. 4), or a portion thereof. As noted above, the method of forming the composite component, such as the airfoil 300, includes weaving woven fabric in step S10 (FIG. 3). Herein, this step can include weaving the first woven fabric 410 and the second woven fabric 420 with the features discussed in more detail below. Although described herein as being two separate pieces of woven fabric, the first woven fabric 410 and the second woven fabric 420 can be two portions of the same woven fabric that are bent or otherwise positioned, as discussed below. Each of the first woven fabric 410 and the second woven fabric 420 can be woven and formed similarly to the woven fabric 200 (FIG. 2A) discussed above with reference to FIGS. 2A to 2D, and that discussion applies here.

The second woven fabric 420 can be positioned to oppose the first woven fabric 410 in step S20 (FIG. 3) and form an initial preform. More specifically, the first woven fabric 410 includes a first base portion 412, and the second woven fabric 420 includes a second base portion 422. The first base portion 412 includes a first outer surface 414 and a first inner surface 416. The first outer surface 414 is positioned on an opposite side of the first base portion 412 than the first inner surface 416. Similarly, the second base portion 422 includes a second outer surface 424 and a second inner surface 426. The second outer surface 424 is positioned on an opposite side of the second outer surface 424 than the second inner surface 426. The first woven fabric 410 is spaced apart from the second woven fabric 420 to form a preform gap 401 therebetween. More specifically, the first woven fabric 410 is positioned with the first inner surface 416 of the first base portion 412 opposing the second inner surface 426 of the first base portion 412. The preform gap 401 is defined between the first inner surface 416 and the second inner surface 426. The preform gap 401 becomes the cavity 340 (FIG. 4) of the airfoil 300 (FIG. 4). The first woven fabric 410 and the second woven fabric 420 each includes a plurality of reinforcing fiber tows 202. The first woven fabric 410 and the second woven fabric 420 can be positioned with the warp fiber tows 210 (FIG. 2A) of the first base portion 412 and the second base portion 422 oriented in the spanwise direction S (FIG. 5), and the weft fiber tows 220 oriented in the chordwise direction Ch. The spanwise direction can be the warp direction Wp (FIG. 2A), and the chordwise direction Ch can be the weft direction Wf (FIG. 2A). In FIG. 6A, the weft fiber tows 220 are shown, but the warp fiber tows 210 and the interlocking fiber tows 230 (FIG. 2A) are omitted for clarity. The directions of the airfoil 300 also apply to the first preform 400. The first woven fabric 410 is positioned in the chordwise direction Ch to form at least a portion of the first wall 320, and the second woven fabric 420 is positioned in the chordwise direction Ch to form at least a portion of the second wall 330.

The first woven fabric 410 includes a first pi-joint receiver 430. The first pi-joint receiver 430 can include one or more legs, such as, for example, a first leg, referred to herein as a first leading leg 432, and a second leg, referred to herein as a first trailing leg 434. Each of the first leading leg 432 and the first trailing leg 434 extends outwardly from the first inner surface 416 of the first base portion 412. The first leading leg 432 and the first trailing leg 434 each extends in a direction transverse to the chordwise direction Ch, such as the thickness direction T, and each of the first leading leg 432 and the first trailing leg 434 can be a first transverse woven fabric portion of the first woven fabric 410. The first transverse woven fabric portion shown in FIG. 6A adjoins the first woven fabric 410 and extends from the first inner surface 416 towards the second inner surface 426 in a direction transverse to the chordwise direction Ch. Each of the first leading leg 432 and the first trailing leg 434 has a length, referred to as a leg length, which is a distance that the first leading leg 432 or the first trailing leg 434, extends from the first inner surface 416 to the tip of the first leading leg 432 or tip of the first trailing leg 434.

Each of the first leading leg 432 and the first trailing leg 434 comprises woven reinforcing fiber tows 202. As with the first base portion 412, the weft fiber tows 220 are schematically depicted in FIG. 7, and the warp fiber tows 210 (FIG. 2A) and the interlocking fiber tows 230 (FIG. 2A) are omitted for clarity. The reinforcing fiber tows 202, forming the first leading leg 432 and the first trailing leg 434, can be outer layers woven on top of the woven fabric used to form the first base portion 412. The outer layers (e.g., the reinforcing fiber tows 202 of the first leading leg 432 and the first trailing leg 434) are integrated with the first base portion 412, which is referred to herein as a tie-in region, more specifically, a first tie-in region 436. At the tie-in region, such as the first tie-in region 436 of the first pi-joint receiver 430, the reinforcing fiber tows 202 in the outer layers are interwoven with the reinforcing fiber tows 202 of the first base portion 412. As schematically illustrated in FIG. 6A, the reinforcing fiber tows 202, such as the weft fiber tows 220, can be continuous fibers that extend from the tip of the first leading leg 432 through the first tie-in region 436, and to the tip of the first trailing leg 434.

The second woven fabric 420 includes a second pi-joint receiver 440. The second pi-joint receiver 440 is formed similarly to the first pi-joint receiver 430, and the discussion above applies here. More specifically, the second pi-joint receiver 440 includes a second leading leg 442 that is similar to the first leading leg 432, a second trailing leg 444 that is similar to the first trailing leg 434, and a second tie-in region 446 that is similar to the first tie-in region 436. The second leading leg 442 and the second trailing leg 444 each extends in a direction transverse to the chordwise direction Ch, such as the thickness direction T, and each of the second leading leg 442 and the second trailing leg 444 can be a second transverse woven fabric portion of the second woven fabric 420. The second transverse woven fabric portion shown in FIG. 6A adjoins the second woven fabric 420 and extends from the second inner surface 426 towards the first inner surface 416 in a direction transverse to the chordwise direction Ch. The second leading leg 442 and the second trailing leg 444 are woven to be separated from each other and positioned to extend from the second inner surface 426 with a second pi-joint gap 448 formed between the second leading leg 442 and the second trailing leg 444.

As noted above, the first leading leg 432 and the first trailing leg 434 are positioned to extend from the first inner surface 416, and the second leading leg 442 and the second trailing leg 444 are positioned to extend from the second inner surface 426. When the first woven fabric 410 and the second woven fabric 420 are positioned to form the first preform 400 in step S20 (Fig. 3), the first pi-joint receiver 430 and the second pi-joint receiver 440 are positioned to engage with each other and, after the subsequent steps, e.g., step S40 (FIG. 3), form the solid rib 352 (FIG. 4). The first pi-joint receiver 430 and the second pi-joint receiver 440 engage with each other to form a joint, such as a pi-joint 470.

As noted above, the airfoil 300 (FIG. 4) can include a plurality of ribs 350 (FIG. 4). To form the plurality of ribs 350, each of the first woven fabric 410 and the second woven fabric 420 can include a plurality of joints, such as a plurality of the pi-joints 470, formed in the manner discussed herein. The plurality of pi-joints 470 can be spaced apart from each other and arranged to form the plurality of ribs 350 discussed above. For example, the plurality of pi-joints 470 can be spaced apart and aligned with each other, such as aligned in the spanwise direction S (FIG. 5) of the first preform 400.

The first pi-joint receiver 430 and the second pi-joint receiver 440 can be positioned to engage with each other in different ways. In FIG. 6A, for example, each of the first leading leg 432 and the first trailing leg 434 is positioned in the second pi-joint gap 448 between the second leading leg 442 and the second trailing leg 444. As depicted here in FIG. 6A, the first leading leg 432 and the first trailing leg 434 are positioned and woven into the first base portion 412 without a gap therebetween.

FIG. 6B shows a second preform 402. The second preform 402 is similar to the first preform 400, and the discussion above applies here, but, in the second preform 402, the first pi-joint receiver 430 and the second pi-joint receiver 440 engage with each other in a different manner. In FIG. 6B, the first leading leg 432 and the first trailing leg 434 are woven to be separated from each other and positioned to extend from the first inner surface 416 with a first pi-joint gap 438 formed between the first leading leg 432 and the first trailing leg 434. The first pi-joint receiver 430 and the second pi-joint receiver 440 engage with each other in an interleaved arrangement of the legs. More specifically, one leg of the first pi-joint receiver 430, such as the first leading leg 432, is positioned between the second leading leg 442 and the second trailing leg 444, such as in the second pi-joint gap 448. The other leg, such as the first trailing leg 434, is positioned outside of the legs of the second pi-joint receiver 440, such as adjacent to the second trailing leg 444. Similarly, one leg of the second pi-joint receiver 440, such as the second trailing leg 444, is positioned between the first leading leg 432 and the first trailing leg 434, such as in the first pi-joint gap 438. The other leg, such as the second leading leg 442, is positioned outside of the legs of the first pi-joint receiver 430, such as adjacent to the first leading leg 432. As used herein, a leg located adjacent to another leg is positioned directly next to the adjacent leg in the woven arrangement, with no intervening legs between them. Adjacent legs can abut or directly border each other.

FIG. 7 is a cross-sectional view of an airfoil 302, taken from a perspective similar to that of FIG. 4. The airfoil 302 depicted in FIG. 7 is similar to the airfoil 300 discussed above with reference to FIGS. 4 and 5, and the discussion above applies here. Instead of depicting a solid rib 352 (FIG. 4), the rib 350 shown in FIG. 7 is a hollow rib 354 including a passage 372 formed therein. The service lines (not shown) can extend through the passage 372 and, thus, the hollow rib 354 can be used to support these service lines, eliminating the need for additional attachment hardware and support hardware for the service lines, which further reduces the weight of the airfoil 302. The hollow rib 354 depicted in FIG. 7 includes a first composite wall, referred to herein as a leading composite wall 374, and a second composite wall, referred to herein as a trailing composite wall 376. The hollow rib 354 can be formed integrally with the first wall 320 and the second wall 330. More specifically, the leading composite wall 374 and the trailing composite wall 376 can be formed integrally with the first wall 320 and the second wall 330 in the manner discussed below.

The leading composite wall 374 and the trailing composite wall 376 define a rib cavity 378 therebetween. The rib cavity 378 can also be further defined between the first wall 320 and the second wall 330. The rib cavity 378 can form or be a part of the passage 372. Additional features can also be positioned within the rib cavity 378. As shown in FIG. 7, for example, an insert is positioned within the rib cavity 378. The insert can be formed of foam and is referred to herein as a foam insert 380, but other inserts can be used. The passage 372 can be formed in the foam insert 380. The passage 372 shown in FIG. 7 is circular, but other shapes can be used. The foam used for the foam insert 380 can be a thermal isolating material, an electrically isolating material, or both. The foam insert 380 can thus be used to help protect the service lines (not shown) from, for example, temperatures to which the airfoil 302 is exposed in the turbine engine 100 (FIG. 1).

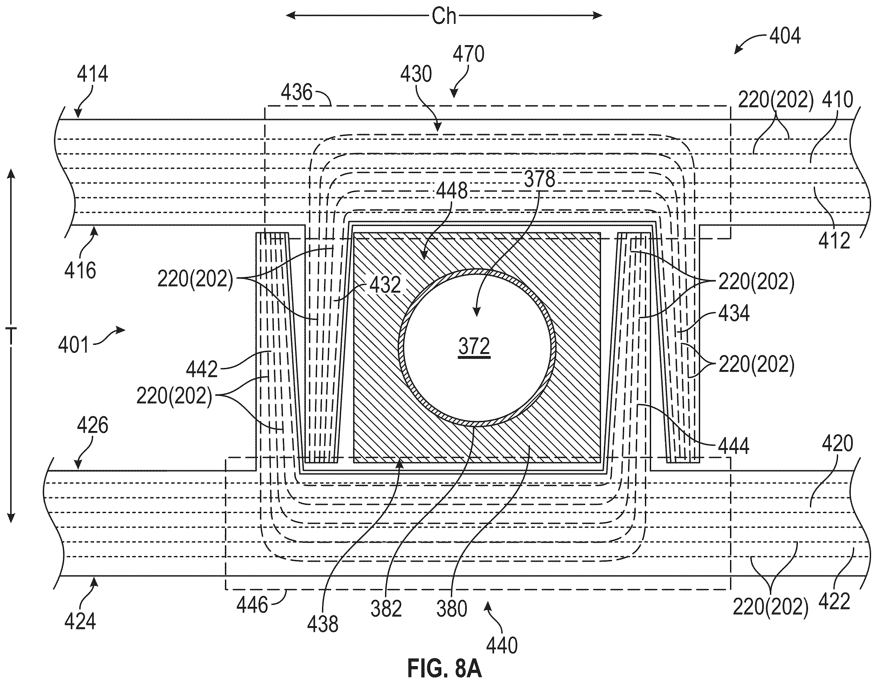

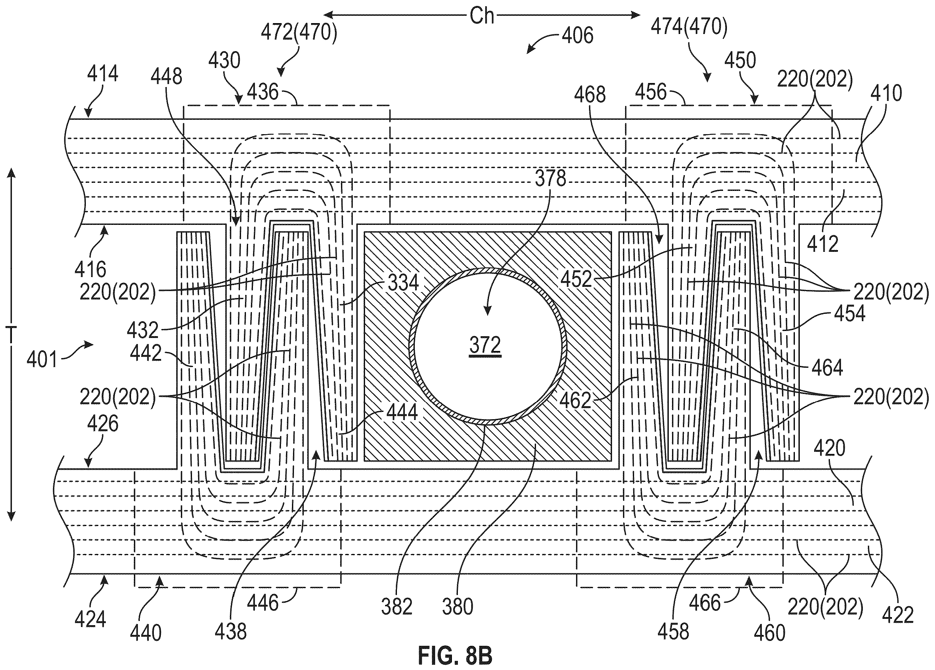

FIGS. 8A and 8B are schematic views of a portion of a preform that can be used to form the airfoil 302 shown in FIG. 7. More specifically, each of FIGS. 8A and 8B shows a portion of the preform used to form the hollow rib 354 in FIG. 7. FIG. 8A shows a third preform 404 that can be used to form the airfoil 302 shown in FIG. 7. The third preform 404 is similar to the second preform 402 shown in FIG. 6B, and that discussion applies here. The third preform 404 includes the first pi-joint receiver 430 of the first woven fabric 410 engaged with a second pi-joint receiver 440 of the second woven fabric 420. In the first woven fabric 410 and the second woven fabric 420, however, the first pi-joint gap 438 and the second pi-joint gap 448 are enlarged, such that, when the first pi-joint receiver 430 and the second pi-joint receiver 440 engage with each other, the first leading leg 432 and the second leading leg 442 are spaced apart from the first trailing leg 434 and the second trailing leg 444, forming the rib cavity 378 therebetween. After subsequent processing, the first leading leg 432 and the second leading leg 442 form the leading composite wall 374, and the first trailing leg 434 and the second trailing leg 444 form the trailing composite wall 376.

The foam insert 380 can be placed in the rib cavity 378 during step S20 (FIG. 3) or S30 (FIG. 3), such as when the first woven fabric 410 and the second woven fabric 420 are positioned to oppose each other. A service line can be positioned in the third preform 404 as part of the steps of forming the preform. For example, a pipe 382 or a conduit can be positioned in the passage 372 formed in the foam insert 380 either before or after the foam insert 380 is positioned between the first woven fabric 410 and the second woven fabric 420.

FIG. 8B shows a fourth preform 406 that can be used to form the airfoil 302 shown in FIG. 7. The fourth preform 406 is similar to the second preform 402 shown in FIG. 6B, and that discussion applies here. The first woven fabric 410 also includes a third pi-joint receiver 450 that is similar to the first pi-joint receiver 430, having a third leading leg 452, a third trailing leg 454, a third tie-in region 456, and a third pi-joint gap 458. Likewise, the second woven fabric 420 also includes a fourth pi-joint receiver 460 that is similar to the second pi-joint receiver 440, having a fourth leading leg 462, a fourth trailing leg 464, a fourth tie-in region 466, and a fourth pi-joint gap 468. The discussion of the first pi-joint receiver 430 and the second pi-joint receiver 440 above applies to the third pi-joint receiver 450 and the fourth pi-joint receiver 460, respectively.

In the fourth preform 406, the first pi-joint receiver 430 of the first woven fabric 410 engages with a second pi-joint receiver 440 of the second woven fabric 420 in a similar manner to the second preform 402 shown in FIG. 8B discussed above, forming a first pi-joint, which is referred to herein as a leading pi-joint 472. Similarly, the third pi-joint receiver 450 and the fourth pi-joint receiver 460 are engaged with each other in a similar manner to the second preform 402 shown in FIG. 8B discussed above, forming a second pi-joint, which is referred to herein as a trailing pi-joint 474. The leading pi-joint 472 and the trailing pi-joint 474 are spaced apart from each other to form the rib cavity 378 therebetween. More specifically, the first leading leg 432 and the first trailing leg 434 of the first pi-joint receiver 430 are woven to be spaced apart from the third leading leg 452 and the third trailing leg 454 of the third pi-joint receiver 450. The second leading leg 442 and the second trailing leg 444 are also woven to be spaced apart from the fourth leading leg 462 and the fourth trailing leg 464 of the fourth pi-joint receiver 460. After subsequent processing, the leading pi-joint 472 forms the leading composite wall 374 and the trailing pi-joint 474 forms the trailing composite wall 376. The foam insert 380 can be positioned in the rib cavity 378 in the manner discussed above.

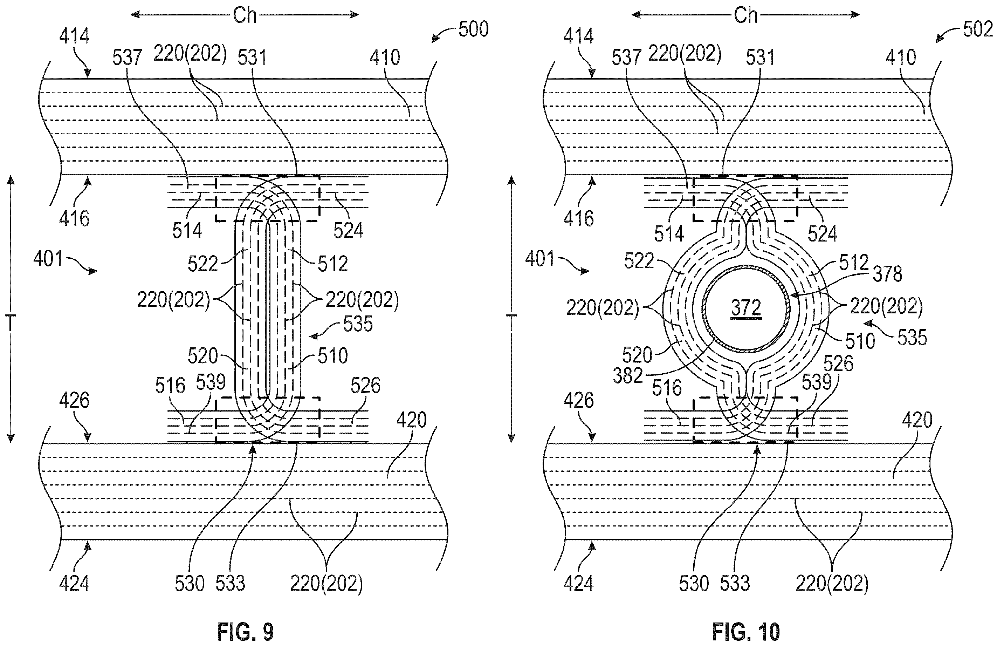

FIG. 9 is a schematic view of a portion of a fifth preform 500 that can be used to form the airfoil 300 shown in FIG. 4. More specifically, FIG. 9 shows a portion of the fifth preform 500 used to form the solid rib 352 in FIG. 4. Features and components of the fifth preform 500 are similar to the features of the first preform 400 discussed above. The discussion above applies here, and the same reference numerals are used for the same or similar components of the fifth preform 500. In FIG. 9, the first transverse woven fabric portion and the second transverse woven fabric portion are formed as a separate woven fabric from the first woven fabric 410 and the second woven fabric 420, and the first transverse woven fabric portion and the second transverse woven fabric portion are positioned to be adjacent to the first woven fabric 410 and the second woven fabric 420, and extend in the thickness direction T in a manner similar to the legs (e.g., the first leading leg 432, the first trailing leg 434, the second leading leg 442, or the second trailing leg 444) discussed above.

The fifth preform 500 includes a first transverse woven fabric 510 and a second transverse woven fabric 520. Each of the first transverse woven fabric 510 and the second transverse woven fabric 520 can be woven and formed similarly to the woven fabric 200 (FIG. 2A) discussed above with reference to FIGS. 2A to 2D, and that discussion applies here. The first transverse woven fabric 510 and the second transverse woven fabric 520 each includes a plurality of reinforcing fiber tows 202. In FIG. 9, the weft fiber tows 220 are shown, but the warp fiber tows 210 (FIG. 2A) and the interlocking fiber tows 230 (FIG. 2A) are omitted for clarity.

The first transverse woven fabric 510 and the second transverse woven fabric 520 are engaged with each other to form a joint, more specifically an I-joint 530. The I-joint 530 can be positioned and oriented similarly to the pi-joints 470 above. In FIG. 9, the first transverse woven fabric 510 and the second transverse woven fabric 520 engage with each other by being interwoven with each other in one or more interwoven regions. The I-joint 530 shown in FIG. 9 includes two interwoven regions, a first-side interwoven region 531 located on a first side of the I-joint 530 proximate the first woven fabric 410 and a second-side interwoven region 533 located on a second side of the I-joint 530 proximate the second woven fabric 420. The interwoven regions can also be referred to as passthrough regions, as will be discussed further below.

The I-joint 530 includes a web 535. The web 535 can be formed between the first-side interwoven region 531 and the second-side interwoven region 533. The web 535 can include at least a portion of the first-side interwoven region 531 and the second-side interwoven region 533. The first transverse woven fabric 510 includes a first transverse portion 512, and the second transverse woven fabric 520 includes a second transverse portion 522. The first transverse portion 512 can be a portion of the first transverse woven fabric 510 between the first-side interwoven region 531 and the second-side interwoven region 533, and the second transverse portion 522 can be a portion of the second transverse woven fabric 520 between the first-side interwoven region 531 and the second-side interwoven region 533. The first transverse portion 512 and the second transverse portion 522 can have various orientations, but, as shown in FIG. 9, one side of the first transverse portion 512 abuts one side of the second transverse portion 522.

The I-joint 530 also includes a first-side flange 537 and a second-side flange 539. The first-side flange 537 is positioned adjacent to the first woven fabric 410, and, more specifically, the first-side flange 537 abuts the first inner surface 416 of the first woven fabric 410. Similarly, the second-side flange 539 is positioned adjacent to the second woven fabric 420, and, more specifically, the second-side flange 539 abuts the second inner surface 426 of the second woven fabric 420. Each of the first-side flange 537 and the second-side flange 539 can include a portion of the first transverse woven fabric 510 and the second transverse woven fabric 520. The first transverse woven fabric 510 includes a first-side first flange portion 514, forming a portion of the first-side flange 537, and a second-side first flange portion 516, forming a portion of the second-side flange 539. Similarly, the second transverse woven fabric 520 includes a first-side second flange portion 524, forming a portion of the first-side flange 537, and a second-side second flange portion 526, forming a portion of the second-side flange 539.

Each of the first transverse woven fabric 510 and the second transverse woven fabric 520 can be arranged in a U-shape. The first transverse woven fabric 510 and the second transverse woven fabric 520 can be positioned relative to each other such that the first-side first flange portion 514 extends away from the first-side second flange portion 524 and the second-side first flange portion 516 extends away from the second-side second flange portion 526. The first transverse woven fabric 510 and the second transverse woven fabric 520 can pass through each other in the first-side interwoven region 531 and the second-side interwoven region 533, such that the first transverse portion 512 is positioned between the first-side second flange portion 524 and the second-side second flange portion 526, and such that the second transverse portion 522 is positioned between the first-side first flange portion 514 and the second-side first flange portion 516.

The weft fiber tows 220 of the first-side first flange portion 514, the second-side first flange portion 516, the first-side second flange portion 524, and the second-side second flange portion 526 can be oriented in the chordwise direction Ch parallel to the weft fiber layers 222 of the first woven fabric 410 and the second woven fabric 420. The weft fiber tows 220 of the first transverse portion 512 and the first-side first flange portion 514 can be oriented in a direction transverse to the weft fiber tows 220 of the first woven fabric 410 and the second woven fabric 420. For example, the weft fiber tows 220 of the first transverse portion 512 and the first-side first flange portion 514 can be oriented orthogonal to the weft fiber tows 220 of the first woven fabric 410 and the second woven fabric 420.

After the I-joint 530 is positioned and when the fifth preform 500 undergoes subsequent processing, and the I-joint 530 can be integrally molded with the first woven fabric 410 and the second woven fabric 420 to form the solid rib 352 (FIG. 4) discussed above. Alternatively, the I-joint 530 can be cured separately (e.g., steps S40 and S50) from the first woven fabric 410 and the second woven fabric 420. Thereafter, the separate composite components can be brought together and attached. In another alternative, the I-joint 530 can be cured (pre-cured) and formed as a composite component before being positioned between the first woven fabric 410 and the second woven fabric 420 and the subsequent processing steps (e.g., step S40 (FIG. 3), etc.) are formed thereafter.

FIG. 10 is a schematic view of a portion of a sixth preform 502 that can be used to form an airfoil similar to the airfoil 302 shown in FIG. 7, with a hollow rib. More specifically, FIG. 10 shows a portion of the sixth preform 502 used to form the hollow rib. The sixth preform 502 is similar to the fifth preform 500 shown in FIG. 9, and that discussion applies here, but in the sixth preform 502, the first transverse portion 512 and the second transverse portion 522 are arranged relative to each other to form the rib cavity 378. More specifically, the rib cavity 378 is formed between the first transverse portion 512 and the first-side first flange portion 514. Into the rib cavity 378, an insert, such as the foam insert 380 (FIG. 8A) or a pipe 382, can be inserted. Here, the first transverse portion 512 and the second transverse portion 522 are shown as being formed around a pipe 382. The first transverse portion 512 and the second transverse portion 522 can thus have an arcuate shape and together form the rib cavity 378.

The preforms (i.e., the first preform 400, the second preform 402, the third preform 404, the fourth preform 406, the fifth preform 500, and the sixth preform 502) discussed herein can be used to form composite airfoils that can be used as struts or stator vanes. The resulting airfoils (e.g., airfoil 300 or airfoil 302) can include integral ribs 350 that strengthen and stiffen the airfoil and minimize the weight of the airfoil, and can be used to hold various service lines, such as harnesses and pipes, also minimizing the weight of the airfoil.

Further aspects of the present disclosure are provided by the subject matter of the following clauses.

A preform for a composite airfoil of a gas turbine engine including a first woven fabric positioned in a chordwise direction to form at least a portion of a first wall of the composite airfoil and a second woven fabric positioned in the chordwise direction to form at least a portion of a second wall of the composite airfoil. The first woven fabric has a first inner surface, and the second woven fabric has a second inner surface. The second woven fabric is located opposite the first woven fabric with the second inner surface opposing the first inner surface to form a preform gap therebetween. The preform also includes a first transverse woven fabric portion abutting to or adjoining the first woven fabric and a second transverse woven fabric portion abutting or adjoining the second woven fabric. The first transverse woven fabric portion extends from the first inner surface towards the second inner surface in a direction transverse to the chordwise direction, and the second transverse woven fabric portion extends from the second inner surface towards the first inner surface in a direction transverse to the chordwise direction. The second transverse woven fabric portion is engaged with the first transverse woven fabric portion to form a joint. Each of the first woven fabric, the second woven fabric, the first transverse woven fabric portion, and the second transverse woven fabric portion is a three-dimensional woven fabric including a plurality of reinforcing fiber tows.

A preform for a composite airfoil of a gas turbine engine, the preform comprising: a first woven fabric positioned in a chordwise direction to form at least a portion of a first wall of the composite airfoil, the first woven fabric having a first inner surface; a second woven fabric positioned in the chordwise direction to form at least a portion of a second wall of the composite airfoil, the second woven fabric having a second inner surface, the second woven fabric being located opposite the first woven fabric with the second inner surface opposing the first inner surface to form a preform gap therebetween; a first transverse woven fabric portion adjacent to or adjoining the first woven fabric, and extending from the first inner surface towards the second inner surface in a direction transverse to the chordwise direction; and a second transverse woven fabric portion abutting or adjoining the second woven fabric, and extending from the second inner surface towards the first inner surface in a direction transverse to the chordwise direction, the second transverse woven fabric portion being engaged with the first transverse woven fabric portion to form a joint, wherein each of the first woven fabric, the second woven fabric, the first transverse woven fabric portion, and the second transverse woven fabric portion is a three-dimensional woven fabric including a plurality of reinforcing fiber tows and having a first direction, a second direction orthogonal to the first direction, and a thickness direction orthogonal to each of the first direction and the second direction, the plurality of reinforcing fiber tows including a plurality of first fiber tows, a plurality of second fiber tows oriented transversely to the plurality of first fiber tows, and a plurality of interlocking fiber tows, the plurality of first fiber tows being arranged in the thickness direction to form a plurality of first fiber layers and the plurality of second fiber tows being arranged in the thickness direction to form a plurality of second fiber layers, the plurality of interlocking fiber tows being woven through the plurality of first fiber tows and the plurality of second fiber tows to interlock at two or more layers of the first fiber layers, the second fiber layers, or both.

The preform of the preceding clause, wherein three-dimensional woven fabric has a first direction, a second direction orthogonal to the first direction, and a thickness direction orthogonal to each of the first direction and the second direction.

The preform of any preceding clause, wherein the plurality of reinforcing fiber tows include a plurality of first fiber tows, a plurality of second fiber tows oriented transversely to the plurality of first fiber tows, and a plurality of interlocking fiber tows. The plurality of first fiber tows is arranged in the thickness direction to form a plurality of first fiber layers and the plurality of second fiber tows is arranged in the thickness direction to form a plurality of second fiber layers. The plurality of interlocking fiber tows is woven through the plurality of first fiber tows and the plurality of second fiber tows to interlock at two or more layers of the first fiber layers, the second fiber layers, or both.

The preform of any preceding clause, wherein the first transverse woven fabric portion is one of a plurality of first transverse woven fabric portions and the second transverse woven fabric portion is one of a plurality of second transverse woven fabric portions, and each first transverse woven fabric portion of the plurality of first transverse woven fabric portions being engaged with a corresponding second transverse woven fabric portion of the plurality of second transverse woven fabric portions to form a plurality of joints.

The preform of any preceding clause, wherein the plurality of joints is aligned in a spanwise direction of the preform.

The preform of any preceding clause, wherein the first woven fabric includes a first base portion having the first inner surface, and the first transverse woven fabric portion is adjoined to the first base portion, and the second woven fabric including a second base portion having the second inner surface and the second transverse woven fabric portion is adjoined to the second base portion.

The preform of any preceding clause, wherein the first woven fabric includes a first pi-joint receiver having a first leading leg and a first trailing leg, one of the first leading leg and the first trailing leg being the first transverse woven fabric portion, and the second woven fabric including a second pi-joint receiver having a second leading leg and a second trailing leg, one of the second leading leg and the second trailing leg being the second transverse woven fabric portion.

The preform of any preceding clause, wherein the first pi-joint receiver is joined to the first base portion at a first tie-in region where the plurality of reinforcing fiber tows of the first pi-joint receiver is interwoven with the plurality of reinforcing fiber tows of the first base portion, and the second pi-joint receiver is joined to the second base portion at a second tie-in region where the plurality of reinforcing fiber tows of the second pi-joint receiver is interwoven with the plurality of reinforcing fiber tows of the second base portion.

The preform of any preceding clause, wherein the second pi-joint receiver includes a second pi-joint gap formed between the second leading leg and the second trailing leg, the first leading leg and the first trailing leg being located in the second pi-joint gap.

The preform of any preceding clause, wherein the first leading leg and the first trailing leg are interleaved with the second leading leg and the second trailing leg.

The preform of any preceding clause, wherein the first pi-joint receiver includes a first pi-joint gap formed between the first leading leg and the first trailing leg, one of the second leading leg or the second trailing leg being located in the first pi-joint gap, and the second pi-joint receiver including a second pi-joint gap formed between the second leading leg and the second trailing leg, one of the first leading leg or the first trailing leg being located in the second pi-joint gap.

The preform of any preceding clause, wherein the first trailing leg and the second leading leg are spaced apart from the first trailing leg and the second trailing leg to form a rib cavity therebetween.

The preform of any preceding clause, further comprising a foam insert located in the rib cavity.

The preform of any preceding clause, wherein the foam insert includes a passage therethrough, extending in a direction transverse to the chordwise direction and parallel to the first woven fabric or the second woven fabric.

The preform of any preceding clause, wherein the first woven fabric includes a third pi-joint receiver having a third leading leg and a third trailing leg, the second woven fabric includes a fourth pi-joint receiver having a fourth leading leg and a fourth trailing leg, and the first pi-joint receiver is engaged with the second pi-joint receiver to form a leading pi-joint, and the third pi-joint receiver is engaged with the fourth pi-joint receiver to form a trailing pi-joint, the trailing pi-joint being spaced apart from the leading pi-joint to form a rib cavity therebetween.

The preform of any preceding clause, wherein a foam insert is located in the rib cavity.

The preform of any preceding clause, wherein the foam insert includes a passage therethrough, extending in a direction transverse to the chordwise direction and parallel to the first woven fabric or the second woven fabric.

The preform of any preceding clause, further comprising a first transverse woven fabric including the first transverse woven fabric portion, the first transverse woven fabric being adjacent to the first woven fabric, and a second transverse woven fabric including the second transverse woven fabric portion, the second transverse woven fabric being adjacent to the second woven fabric.

The preform of any preceding clause, wherein the first transverse woven fabric includes a first-side first flange portion abutting the first inner surface, and the second transverse woven fabric includes a second-side second flange portion abutting the second inner surface.

The preform of any preceding clause, wherein the first transverse woven fabric includes a second-side first flange portion abutting the second inner surface, the second-side first flange portion, and the second-side second flange portion form a second-side flange, the second transverse woven fabric including a first-side second flange portion abutting the first inner surface, the first-side first flange portion, and the first-side second flange portion forming a first-side flange, and the first transverse woven fabric portion and the second transverse woven fabric portion forming a web between the first-side flange and the second-side flange.

The preform of any preceding clause, wherein the web extends substantially perpendicular to the chordwise direction between the first-side flange and the second-side flange.

The preform of any preceding clause, wherein the first-side flange and the second-side flange extend in parallel in the spanwise direction.

The preform of any preceding clause, wherein the first transverse woven fabric and the second transverse woven fabric are interwoven with each other in at least one region of the web.

The preform of any preceding clause, wherein the first transverse woven fabric and the second transverse woven fabric are interwoven with each other in a first-side interwoven region proximate the first-side flange and in a second-side interwoven region proximate the second-side flange.

The preform of any preceding clause, wherein the first transverse woven fabric portion and the second transverse woven fabric portion are arranged to form a rib cavity therebetween, the rib cavity being located between the first-side interwoven region and the second-side interwoven region.

The preform of any preceding clause, wherein the rib cavity is arcuate in cross-section between the first-side interwoven region and the second-side interwoven region.

A method of forming a preform for a composite airfoil of a gas turbine engine includes positioning a first woven fabric in a chordwise direction to form at least a portion of a first wall of the composite airfoil and positioning a second woven fabric in the chordwise direction to form at least a portion of a second wall of the composite airfoil. The first woven fabric has a first inner surface, and the second woven fabric has a second inner surface. The second woven fabric is positioned opposite the first woven fabric with the second inner surface opposing the first inner surface to form a preform gap therebetween. The method further includes positioning a first transverse woven fabric portion from the first inner surface towards the second inner surface in a direction transverse to the chordwise direction. The method further includes positioning a second transverse woven fabric portion from the second inner surface towards the first inner surface in the direction transverse to the chordwise direction, the second transverse woven fabric portion engaging the first transverse woven fabric portion to form a joint.

A method of forming a preform for a composite airfoil includes forming a preform of any preceding clause by positioning the woven fabrics and portions thereof.

The method of any preceding clause, further including introducing a matrix material into the preform and curing the matrix material within the preform to form a composite component.

The method of any preceding clause wherein the composite component is an airfoil.

] The method of any preceding clause wherein the first woven fabric of the preform forms at least a portion of a first wall of the airfoil.

The method of any preceding clause wherein the second woven fabric of the preform forms at least a portion of a second wall of the airfoil located opposite the first wall.

The method of any preceding clause wherein the first transverse woven fabric portion and the second transverse woven fabric portion form a rib extending between the first wall and the second wall of the airfoil.

The method of any preceding clause wherein the rib forms a solid rib extending between the first wall and the second wall.

The method of any preceding clause wherein the rib defines a rib cavity located between the first transverse woven fabric portion and the second transverse woven fabric portion.

The method of the preceding clause further including placing a foam insert in the rib cavity prior to curing the matrix material.

The method of the preceding clause wherein the foam insert includes a passage, the passage forming a conduit through the rib for receiving a service line.

The method of any preceding clause wherein the first woven fabric and the second woven fabric together define a cavity within the airfoil located between the first wall and the second wall.

The method of any preceding clause wherein the cavity extends between a leading portion of the airfoil and a trailing portion of the airfoil.

The method of any preceding clause wherein the airfoil further includes an inner end portion and an outer end portion, and wherein the first wall, the second wall, and the rib extend in a spanwise direction between the inner end portion and the outer end portion.

The method of any preceding clause wherein curing the matrix material further includes forming the rib integrally with the first wall and the second wall.

Although the foregoing description is directed to the preferred embodiments of the present disclosure, other variations and modifications will be apparent to those skilled in the art and may be made without departing from the disclosure. Moreover, features described in connection with one embodiment of the present disclosure may be used in conjunction with other embodiments, even if not explicitly stated above.

## Claims

1. A preform for a composite airfoil (300, 302) of a gas turbine engine (100), the preform comprising:
a first woven fabric (410) positioned in a chordwise direction to form at least a portion of a first wall (320) of the composite airfoil (300, 302), the first woven fabric (410) having a first inner surface (416);
a second woven fabric (420) positioned in the chordwise direction to form at least a portion of a second wall (330) of the composite airfoil (300, 302), the second woven fabric (420) having a second inner surface (426), the second woven fabric (420) being located opposite the first woven fabric (410) with the second inner surface (426) opposing the first inner surface (416) to form a preform gap (401) therebetween;
a first transverse woven fabric portion (432, 434, 510) abutting or adjoining the first woven fabric (410), and extending from the first inner surface (416) towards the second inner surface (426) in a direction transverse to the chordwise direction; and
a second transverse woven fabric portion (442, 444, 520) abutting or adjoining the second woven fabric (420), and extending from the second inner surface (426) towards the first inner surface (416) in a direction transverse to the chordwise direction, the second transverse woven fabric portion (442, 444, 520) being engaged with the first transverse woven fabric portion (432, 434, 510) to form a joint (470, 530),
wherein each of the first woven fabric (410), the second woven fabric (420), the first transverse woven fabric portion (432, 434, 510), and the second transverse woven fabric portion (442, 444, 520) is a three-dimensional woven fabric including a plurality of reinforcing fiber tows (202).

2. The preform of claim 1, wherein the first transverse woven fabric portion (432, 434) is one of a plurality of first transverse woven fabric portions (432, 434) and the second transverse woven fabric portion (442, 444) is one of a plurality of second transverse woven fabric portions (442, 444), and
wherein each first transverse woven fabric portion (432, 434) of the plurality of first transverse woven fabric portions (432, 434) is engaged with a corresponding second transverse woven fabric portion (442, 444) of the plurality of second transverse woven fabric portions (442, 444) to form a plurality of joints (470, 530).

3. The preform of claim 1 or 2, wherein the first woven fabric (410) includes a first base portion (412) having the first inner surface (416), and the first transverse woven fabric portion (432, 434) is adjoined to the first base portion (412), and
wherein the second woven fabric (420) includes a second base portion (422) having the second inner surface (426), and the second transverse woven fabric portion (442, 444) is adjoined to the second base portion (422).

4. The preform of claim 3, wherein the first woven fabric (410) includes a first pi-joint receiver (430) having a first leading leg (432) and a first trailing leg (434), one of the first leading leg (432) and the first trailing leg (434) being the first transverse woven fabric portion (432, 434), and
wherein the second woven fabric (420) includes a second pi-joint receiver (440) having a second leading leg (442) and a second trailing leg (444), one of the second leading leg (442) and the second trailing leg (444) being the second transverse woven fabric portion (442, 444).

5. The preform of claim 4, wherein the first pi-joint receiver (430) is joined to the first base portion (412) at a first tie-in region (436) where the plurality of reinforcing fiber tows (202) of the first pi-joint receiver (430) is interwoven with the plurality of reinforcing fiber tows (202) of the first base portion (412), and
wherein the second pi-joint receiver (440) is joined to the second base portion (422) at a second tie-in region (446) where the plurality of reinforcing fiber tows (202) of the second pi-joint receiver (440) is interwoven with the plurality of reinforcing fiber tows (202) of the second base portion (422).

6. The preform of claim 4, wherein the second pi-joint receiver (440) includes a second pi-joint gap (448) formed between the second leading leg (442) and the second trailing leg (444), the first leading leg (432) and the first trailing leg (434) being located in the second pi-joint gap (448), or
wherein the first pi-joint receiver (430) includes a first pi-joint gap (438) formed between the first leading leg (432) and the first trailing leg (434), one of the second leading leg (442) or the second trailing leg (444) being located in the first pi-joint gap (438), and the second pi-joint receiver (440) includes a second pi-joint gap (448) formed between the second leading leg (442) and the second trailing leg (444), one of the first leading leg (432) or the first trailing leg (434) being located in the second pi-joint gap (448).

7. The preform of claim 4, wherein the first trailing leg (434) and the second leading leg (442) are spaced apart from the first trailing leg (434) and the second trailing leg (444) to form a rib cavity (378) therebetween.

8. The preform of claim 4, wherein the first woven fabric (410) includes a third pi-joint receiver (450) having a third leading leg (452) and a third trailing leg (454),
wherein the second woven fabric (420) includes a fourth pi-joint receiver (460) having a fourth leading leg (462) and a fourth trailing leg (464), and
wherein the first pi-joint receiver (430) is engaged with the second pi-joint receiver (440) to form a leading pi-joint (472), and the third pi-joint receiver (450) is engaged with the fourth pi-joint receiver (460) to form a trailing pi-joint (474), the trailing pi-joint (474) being spaced apart from the leading pi-joint (472) to form a rib cavity (378) therebetween.

9. The preform of claim 7 or 8, wherein a foam insert (380) is located in the rib cavity (378).

10. The preform of claim 9, wherein the foam insert (380) includes a passage (372) therethrough, extending in a direction transverse to the chordwise direction and parallel to the first woven fabric (410) or the second woven fabric (420).

11. The preform of claim 1 or 2, further comprising:
a first transverse woven fabric (510) including the first transverse woven fabric portion (510), the first transverse woven fabric (510) being adjacent to the first woven fabric (410); and
a second transverse woven fabric (520) including the second transverse woven fabric portion (520), the second transverse woven fabric (520) being adjacent to the second woven fabric (420).

12. The preform of claim 11, wherein the first transverse woven fabric (510) includes a first-side first flange portion (514) abutting the first inner surface (416), and
wherein the second transverse woven fabric (520) includes a second-side second flange portion (526) abutting the second inner surface (426).

13. The preform of claim 12, wherein the first transverse woven fabric (510) includes a second-side first flange portion (516) abutting the second inner surface (426), the second-side first flange portion (516), and the second-side second flange portion (526) forming a second-side flange (539),
wherein the second transverse woven fabric (520) includes a first-side second flange portion (524) abutting the first inner surface (416), the first-side first flange portion (514), and the first-side second flange portion (524) forming a first-side flange (537), and
wherein the first transverse woven fabric portion (510) and the second transverse woven fabric portion (520) form a web (535) between the first-side flange (537) and the second-side flange (539).

14. The preform of claim 13, wherein the first transverse woven fabric (510) and the second transverse woven fabric (520) are interwoven with each other in at least one region of the web (535).

15. The preform of claim 13, wherein the first transverse woven fabric (510) and the second transverse woven fabric (520) are interwoven with each other in a first-side interwoven region (531) proximate the first-side flange (537) and in a second-side interwoven region (533) proximate the second-side flange (539), and
wherein the first transverse woven fabric portion (510) and the second transverse woven fabric portion (520) are arranged to form a rib cavity (378) therebetween, the rib cavity (378) being located between the first-side interwoven region (531) and the second-side interwoven region (533).
